# EUROPEAN PATENT SPECIFICATION

(11) **EP 0 775 739 B1**
(45) Date of publication and mention of the grant of the patent: **13.08.2003**
(21) Application number: 96118581.6
(22) Date of filing: 20.11.1996
(51) Int. Cl.: C10G 45/64, B01J 29/04

(54) **Dewaxing with nickel-silicalite catalyst**
Entwachsung mittels eines Nickel-Silicalitkatalysators
Déparrafinage à l'aide d'un catalyseur nickel-silicalite

(30) Priority: 21.11.1995 US 561574
(43) Date of publication of application: 28.05.1997
(73) Proprietor: FINA TECHNOLOGY, INC., Houston, Texas 77267-4412 (US)
(72) Inventor: Butler, James R., Houston, Texas 77059 (US); Forward, Cleve, Tyler, TX 75702 (US)
(74) Representative: Jolly, Jean-Pierre

(56) References cited:
- EP-A- 0 113 381
- WO-A-91/13131
- US-A- 4 061 724
- US-A- 5 052 561
- D.W.A. SHARP: "THE PENGUIN ICTIONARY OF CHEMISTRY ", 1983, PENGUIN REFERENCE, LONDON

## Description

### TECHNICAL FIELD

The present invention relates to a process for dewaxing middle distillate petroleum streams such as diesel and kerosene utilizing a nickel impregnated silicalite catalyst.

### BACKGROUND OF THE INVENTION

Many petroleum middle distillate streams, particularly middle distillate streams produced from medium or severe hydrocracking operations, require dewaxing to provide the desired properties. Dewaxing involves the conversion of higher molecular weight straight and branched chain paraffins to lower molecular weight compounds.

Conventional dewaxing processes for middle distillate fractions require temperatures in excess of about 700°F, typically in the range of from about 710°F to about 750°F (376°C to 398°C). Heating a middle distillate stream to this temperature range consumes a considerable amount of energy and requires substantial investment in process equipment. Thus, it would be desirable to reduce the amount of energy consumed and the amount of process equipment required to effectively dewax a typical middle distillate stream. Document D1 provides a process for hydrodewaxing middle distillates with a catalyst devoid of Group VI B metal components and comprising nickel components supported on a mixture of one or more amorphous, inorganic, refractory oxide components and a crystalline, intermediate pore, nonzeolitic molecular sieve having cracking activity, preferably a mixture of alumina and silicalite. The process of the present invention provides a method of dewaxing a middle distillate stream at lower than conventional temperatures, down to as low as about 260°C (500°F). Preferably, the dewaxing process of the present invention is practiced in the range of from about 260°C (500°F) to about 371°C (700°F). Dewaxing at these temperatures is achieved by utilizing a nickel- impregnated silicalite catalyst.

### SUMMARY OF THE INVENTION

The present invention provides a method for dewaxing middle distillate petroleum products such as diesel, kerosene and light cycle oil utilizing a nickel impregnated silicalite catalyst. The use of the catalyst permits the dewaxing operation to be conducted at lower temperatures than conventionally used to dewax middle distillate streams. The Si/Al ratio of the silicalite utilized in the process of the present invention is greater than 200 and the catalyst contains from about 0.1% to about 5% nickel. The use of the catalyst permits dewaxing at temperatures that allow the dewaxing process to be accomplished in one or more beds of a multiple bed reactor that may also be used for hydrodesulfurization.

### DETAILED DESCRIPTION

The process of the present invention provides an improved method of dewaxing middle distillate petroleum fractions such as diesel, kerosene and light cycle oil (LCO). The term "middle distillate" as used herein refers to petroleum distillate fractions having boiling points in the range of from about 160°C to about 500°C. These fractions are also characterized as having flash points between about 30°C and about 80°C. The process utilizes a silicalite catalyst that has been impregnated with nickel to dewax middle distillate fractions at temperatures that are lower than those used in conventional processes.

The catalysts employed in the process of the present invention can be described as crystalline microporous organosilicates that are prepared hydrothermally with a reaction mixture including tetraethylammonium cations, alkali metal cations, water and a reactive source of silica. In contrast to crystalline zeolite materials which are aluminosilicates comprising three dimensional SiO₄ and AlO₄ tetrahedra joined by shared oxygen atoms, the silicalite crystalline organosilicates utilized in the process of the present invention are prepared from reaction systems which are essentially free of aluminum-containing reagents. Any aluminum present in the silicalite crystalline organosilicates is the result of impurities contained in the materials used to prepare the silicalites. Preferably, the Si/Al ratio of the silicalite utilized in the process of the present invention is greater than 200, more preferably the Si/Al ratio is in the range of from about 250 to about 500.

After preparation, the silicalite catalyst may be dispersed in a binder or support material such as alumina. The silicalite binder admixture may be formed into the desired shape by extrusion, pelletization or other techniques known to those skilled in the art.

After the silicalite binder admixture has been formed, it is impregnated with nickel, preferably in the form of an aqueous solution of a nickel salt. Methods of impregnating the silicalite catalyst with nickel are known to those skilled in the art. One method involves forming solutions of a nickel containing compound such as nickel nitrate or nickel acetate and then contacting the silicalite catalyst with the solution. The catalyst is contacted with a sufficient amount of the solution to deposit appropriate amounts of nickel or nickel salts onto the silicalite catalyst. Preferably, the silicalite catalyst is contacted with a sufficient amount of the solution to impregnate the catalyst with from about 0.1 wt% to about 5 wt% nickel. More preferably, the catalyst is impregnated with from about 0.5 wt% to about 1.5 wt% nickel. After the catalyst has been impregnated with the desired amount of nickel, the catalyst may be calcined.

The nickel impregnated or nickel-containing silicalite catalyst prepared in accordance with the foregoing may be advantageously utilized to dewax middle distillate petroleum products. In one embodiment of the process of the present invention, the nickel impregnated silicalite catalyst is prepared as a 0.16 cm (one-sixteenth inch) diameter extrudate and is characterized by a crystallite particle size in the range of from about 1 to 2 microns (µm). The catalyst has a Si/Al ratio of about 300 and contains about 1% nickel.

The process of the present invention can be carried out using a variety of process equipment, including a reactor vessel which defines a reaction zone containing catalyst material. Either single or multiple catalyst beds may be employed in the reaction zone. The dewaxing process of the present invention may be conducted at pressures of from about 2.07 MPa (300 psig) to about 13.79 MPa (2000 psig), preferably from about 2.76 MPa (400 psig) to about 6.89 MPa (1000 psig). Liquid hourly space velocities may range from about 0.1 hr⁻¹ to about 30 hr⁻¹, more preferably from about 1 hr⁻¹ to about 8 hr⁻². Hydrogen may be injected as needed depending on the particular feedstock to the dewaxing reactor. Normally hydrogen will be injected at a rate in the range of from 53.45 to 356.3 m³/m³ (300 to 2000 SCFB) (Standard Cubic Feet per Barrel) of feedstock. As noted above, the dewaxing process may be operated at temperatures ranging from about' 260°C (500°F) to about 565.6°C (1050°F) and more preferably in the range of from about 287.8°C (550°F) to about 371°C (700°F).

In another embodiment of the invention, the nickel-impregnated silicalite catalyst is used in one or more beds of a multiple bed reactor that also contain a catalyst suitable for hydrodesulfurization. The combination of dewaxing and hydrodesulfurization in a single multiple bed reactor is possible because the nickel-impregnated silicalite catalyst is effective in dewaxing within the same temperature range that hydrodesulfurization is accomplished.

The process of the present invention may be further illustrated by the following example which is not to be construed as limiting the scope of the invention as hereinafter claimed.

### EXAMPLE

Approximately 36 milliliters of a silicate catalyst impregnated with approximately 1% nickel is introduced into a loboratory scale reactor. The catalyst has a particle size distribution of between 420 and 250 microns (40 and 60 mesh) Nitrogen is introduced into the reactor and temperature is increased to about 115°C at a rate of about 50°C per hour. The temperature is maintained at this level for a period of from about 3 to 4 hours and then increased to about 150°C. The reactor is then placed under hydrogen flow for about ten to fifteen hours after which the reactor temperature is increased to about 250°C.

A feed stream comprising a mixture of 52% straight run distillate, 16% kerosene and 20% light cycle oil is introduced into the reactor at a rate of 3.00 milliters per minute, corresponding to a liquid hourly space velocity of 5.0 hr⁻¹. Hydrogen is fed to the reactor at a rate of 0.266 liters/min. and the reactor pressure is maintained between 2.96 and 3.1 MPa (430 and 450 psig). The reactor feed stream is characterized in Table 1 below:

**TABLE 1 :**

| REACTOR FEED | |
|---|---|
| API Gravity | 32.6 |
| Color | 1.5 |
| Sulfur wt% | 0.815 |
| Flash Point | 87.8°C (190°F) |
| Pour Point | -6.7°C (20°F) |
| Cloud Point | -3.3°C (26°F) |
| Initial Boiling Point | 196.7°C (386°F) |
| Centane Index | 48.6 |
| H₂/Distillate Ratio | 89m³/m³ (500 SCFB) (Standard Cubic Feet per Barrel). |

The test is conducted for 600 hours and the reactor effluent is periodically sampled and analyzed for pour point and cloud point. Reactor inlet and outlet temperatures along with the reactor effluent pour point and cloud point are set forth below:

**TABLE 2**

| Test Duration (hours) | Reactor Inlet | Temp (°C) Outlet | Pour Point (°F) | °C | Cloud Point (°F) | °C |
|---|---|---|---|---|---|---|
| 2 | 252 | 253 | (0) | -17.8 | (18) | -7.8 |
| 22 | 262 | 264 | (20) | -6.7 | (22) | -5.6 |
| 29 | 285 | 286 | (10) | -12.2 | (13) | -10.6 |
| 46 | 286 | 287 | (10) | -12.2 | (17) | -8.3 |
| 70 | 290 | 292 | (10) | -12.2 | (17) | -8.3 |
| 94 | 295 | 296 | (5) | -15 | (12) | -11.1 |
| 103 | 303 | 305 | (10) | -12.2 | (15) | -9.4 |
| 118 | 303 | 305 | (10) | -12.2 | (16) | -8.9 |
| 126 | 315 | 318 | (5) | -15 | (11) | -11.7 |
| 142 | 312 | 315 | (10) | -12.2 | (15) | -9.4 |
| 150 | 317 | 321 | (10) | -12.2 | (14) | -10 |
| 167 | 316 | 319 | (5) | -15 | (16) | -8.9 |
| 175 | 318 | 320 | (5) | -15 | (16) | -8.9 |
| 192 | 315 | 318 | (15) | -9.4 | (22) | -5.6 |
| 200 | 321 | 324 | (10) | -12.2 | (15) | -9.4 |
| 218 | 320 | 323 | (10) | -12.2 | (16) | -8.9 |
| 241 | 328 | 330 | (10) | -12.2 | (13) | -10.6 |
| 265 | 327 | 329 | (10) | -12.2 | (14) | -10 |
| 289 | 330 | 332 | (10) | -12.2 | (14) | -10 |
| 321 | 328 | 331 | (10) | -12.2 | (11) | -11.7 |
| 336 | 328 | 331 | (10) | -12.2 | (13) | -10.6 |
| 360 | 328 | 334 | (10) | -12.2 | (16) | -8.9 |
| 365 | 329 | 332 | (10) | -12.2 | (12) | -11.1 |
| 384 | 329 | 331 | (15) | -9.4 | (16) | -8.9 |
| 408 | 334 | 336 | (10) | -12.2 | (15) | -9.4 |
| 432 | 336 | 338 | (5) | -15 | (15) | -9.4 |
| 439 | 340 | 342 | (5) | -15 | (10) | -12.2 |
| 456 | 340 | 342 | (5) | -15 | (14) | -10 |
| 480 | 338 | 340 | (10) | -12.2 | (16) | -8.9 |
| 504 | 339 | 342 | (10) | -12.2 | (17) | -8.3 |
| 511 | 342 | 344 | (10) | -12.2 | (12) | -11.1 |
| 552 | 344 | 345 | (10) | -12.2 | (15) | -9.4 |
| 578 | 346 | 348 | (10) | -12.2 | (16) | -8.9 |
| 600 | 354 | 355 | (0) | -17.8 | (8) | -13.3 |

While the invention has been described in connection with the foregoing example, it will be appreciated by the those skilled in the art that the invention is subject to variations and modifications which fall within the scope of the appended claims and which are intended to be covered thereby.

## Claims

1. A process for dewaxing middle distillate petroleum products comprising :
introducing a middle distillate petroleum fraction having a boiling point in the range of from 160°C to 500°C into a reaction zone; and
dewaxing the middle distillate petroleum fraction in the reaction zone at temperatures of from 260°C (500°F) to 565.6°C (1050°F) in the presence of nickel-containing silicalite catalyst wherein the amount of nickel is of from 0.1 to 5 wt%, **characterized by** a crystallite particle size in the range of from 0.1 to 2 (µm) microns.

2. The process of Claim 1 wherein the middle distillate fraction is dewaxed at a temperature between 260°C (500°F) and 454.4°C (850°F).

3. The process of Claim 2 wherein the middle distillate fraction is dewaxed at a temperature between 260°C (500°F) and 371°C (700°F)

4. The process of any one of the preceding claims wherein the reaction zone is maintained at a pressure of from 2.04 Mpa (300 psig) to 13.79 Mpa (2000 psig).

5. The process of any one of the preceding claims, wherein the middle distillate petroleum fraction is selected from the group consisting of diesel, kerosene, light cycle oil and mixtures thereof.

6. The process of any one of the preceding claims wherein the reaction zone is operated at liquid hourly space velocities of from 0.1 hr⁻¹ to 30 hr⁻¹.

7. The process of any one of the preceding claims wherein the reaction zone comprises at least one catalyst bed in a multibed reactor, said at least one catalyst bed containing a catalyst suitable for hydrodesulfurization of middle distillate petroleum fractions.

8. The process of any one of the preceding claims wherein hydrogen is introduced into the reaction zone at a rate of from 53.45 m³/m³ (300 SCFB) to 356 m³/m³ (2000 SCFB) based upon the flow of the middle distillate fraction.

9. The process of Claim 3 wherein the pressure is from 0.34 (50) to 13.79 MPa (2000 psig) and the catalyst is a nickel containing silicalite catalyst comprising from 0.5% to 1.5% nickel.

10. The process of Claim 9 wherein the middle distillate petroleum fraction is selected from the group consisting of diesel, kerosene and light cycle oil and mixtures thereof.

11. The process of Claim 9 wherein the reaction zone further comprises a catalyst suitable for hydrodesulfurization of the middle distillate petroleum fraction.

12. The process of Claim 9 wherein hydrogen is introduced into the reaction zone at a rate of from 53.45 m³/m³ (300 SCFB) to 356 m³/m³ (2000 SCFB) based upon the flow of the middle distillate fraction.

## Patentansprüche

1. Verfahren zum Entparaffinieren von Mitteldestillat-erdölprodukten, **gekennzeichnet durch**:
Einleiten einer Mitteldestillaterdölfraktion mit einem Siedepunkt im Bereich von 160 °C bis 500 °C in eine Reaktionszone; und
Entparaffieren der Mitteldestillaterdölfraktion in der Reaktionszone bei einer Temperatur von 260°C (500°F) bis 565.6°C (1050°F) in Gegenwart eines nickelhaltigen Silikalitkatalysators, wobei die Nickelmenge zwischen 0.1 und 5 Gew.-% beträgt und eine Kristallitpartikelgrösse im Bereich von 0.1 bis 2 Mikron (mµ) gegeben ist.

2. Verfahren nach Anspruch 1, **dadurch gekennzeichnet, dass** die Mitteldestillatfraktion bei einer Temperatur zwischen 260 °C (500 °F) und 454.4.°C (850 °F) entparaffiniert wird.

3. Verfahren nach Anspruch 2, **dadurch gekennzeichnet, dass** die Mitteldestillatfraktion bei einer Temperatur zwischen260°C (500°F) und 371°C (700°F) entparaffiniert wird.

4. Verfahren nach irgendeinem der vorstehenden Ansprüche, **dadurch gekennzeichnet, dass** in der Reaktionszone ein Druck von 2.04 MPa (300 psig) bis 13.79 MPa (2000 psig) vorgehalten wird.

5. Verfahren nach irgendeinem der vorstehenden Ansprüche, **dadurch gekennzeichnet, dass** die Mitteldestillaterdölfraktion aus der aus Diesel, Kerosin, leichtem Rückführöl und Gemischen derselben bestehenden Gruppe ausgewählt wird.

6. Verfahren nach irgendeinem der vorstehenden Ansprüche, **dadurch gekennzeichnet, dass** die Reaktionszone mit Flüssigkeitsstundenraumgeschwindigkeiten von 0.1 h-1 bis 30 h-1 betrieben wird.

7. Verfahren nach irgendeinem der vorstehenden Ansprüche, **dadurch gekennzeichnet, dass** die Reaktionszone in einem Mehrbettreaktor mindestens ein Katalysatorbett umfasst, in dem sich ein für die hydrierende Entschwefelung von Mitteldestillaterdölfraktionen geeigneter Katalysator befindet.

8. Verfahren nach irgendeinem der vorstehenden Ansprüche, **dadurch gekennzeichnet, dass** Wasserstoff bezogen auf den Durchfluss der Mitteldestillatfraktion mit einer Geschwindigkeit von 53.45 m³/m³ (300 SCFB) bis 356 m³/m³ (2000 SCFB) in die Reaktionszone eingeleitet wird.

9. Verfahren nach Anspruch 3, **dadurch gekennzeichnet, dass** der Druck zwischen 0.34 MPa (50 psig) und 13.79 MPa (2000 psig) beträgt und dass es sich bei dem Katalysator um einen nickelhaltigen Silikalitkatalysator mit 0.5 % bis 1.5 % Nickel handelt.

10. Verfahren nach Anspruch 9, **dadurch gekennzeichnet, dass** die Mitteldestillaterdölfraktion aus der aus Diesel, Kerosin und leichtem Rückführöl sowie Gemischen derselben bestehenden Gruppe ausgewählt wird.

11. Verfahren nach Anspruch 9, **dadurch gekennzeichnet, dass** die Reaktionszone darüber hinaus einen zur hydrierenden Entschwefelung der Mitteldestillaterdölfraktion geeigneten Katalysator umfasst.

12. Verfahren-nach Anspruch 9, **dadurch gekennzeichnet, dass** Wasserstoff bezogen auf den Durchfluss der Mitteldestillatfraktion mit einer Geschwindigkeit von 53.45 m³/m³ (300 SCFB) bis 356 m³/m³ (2000 SCFB) in die Reaktionszone eingeleitet wird.

## Revendications

1. Procédé pour déparaffiner des produits pétroliers de distillat moyen, comprenant :
l'introduction d'une coupe pétrolière de distillat moyen ayant un point d'ébullition situé dans la plage allant de 160°C à 500°C dans une zone réactionnelle ; et
déparaffiner la coupe pétrolière de distillat moyen dans la zone réactionnelle à des températures de 260°C (500°F) à 565,6°C (1050°F) en présence d'un catalyseur silicalite contenant du nickel dans lequel la quantité de nickel est de 0,1 à 5 % en poids, **caractérisé par** une granulométrie des cristallites située dans la plage allant de 0,1 à 2 (µm) micromètres.

2. Procédé selon la revendication 1, dans lequel la fraction de distillat moyen est déparaffinée à une température comprise entre 260°C (500°F) et 454,4°C (850°F).

3. Procédé selon la revendication 2, dans lequel la fraction de distillat moyen est déparaffinée à une température comprise entre 260°C (500°F) et 371°C (700°F).

4. Procédé selon l'une quelconque des revendications précédentes, dans lequel la zone réactionnelle est maintenue sous une pression de 2,04 MPa (300 psig) à 13,79 MPa (2000 psig).

5. Procédé selon l'une quelconque des revendications précédentes, dans lequel la coupe pétrolière de distillat moyen est choisie dans l'ensemble constitué par le gazole, le kérosène, le gas-oil cyclé léger et leurs mélanges.

6. Procédé selon l'une quelconque des revendications précédentes, dans lequel la zone réactionnelle opère à des vitesses spatiales horaires de liquide de 0,1 h⁻¹ à 30 h⁻¹.

7. Procédé selon l'une quelconque des revendications précédentes, dans lequel la zone réactionnelle comprend au moins un lit de catalyseur dans un réacteur à lit multiples, ledit lit de catalyseur au nombre d'au moins un contenant un catalyseur convenable pour une hydrodésulfuration de fractions pétrolières de distillat moyen.

8. Procédé selon l'une quelconque des revendications précédentes, dans lequel de l'hydrogène est introduit dans la zone réactionnelle à un débit de 53,45 m³/m³ (300 SCFB) à 356 m³/m³ (2000 SCFB) sur la base de l'écoulement de la fraction de distillat moyen.

9. Procédé selon la revendication 3, dans lequel la pression est de 0,34 (50) à 13,79 MPa (2000 psig) et le catalyseur est un catalyseur silicalite contenant du nickel comprenant de 0,5 % à 1,5 % de nickel.

10. Procédé selon la revendication 9, dans lequel la coupe pétrolière de distillat moyen est choisie dans l'ensemble constitué par le gazole, le kérosène et le gas-oil cyclé léger et leurs mélanges.

11. Procédé selon la revendication 9, dans lequel la zone réactionnelle comprend en outre un catalyseur convenable pour 1'hydrodésulfuration de la coupe pétrolière de distillat moyen.

12. Procédé selon la revendication 9, dans lequel de l'hydrogène est introduit dans la zone réactionnelle à un débit de 53,45 m³/m³ (300 SCFB) à 356 m³/m³ (2000 SCFB) sur la base de l'écoulement de la fraction de distillat moyen.
